# EUROPÄISCHE PATENTANMELDUNG

(11) **EP 4 209 326 A2**
(43) Veröffentlichungstag der Anmeldung: **12.07.2023**
(21) Anmeldenummer: 22212497.6
(22) Anmeldetag: 09.12.2022
(51) Int. Cl.: B29C 49/42, B29L 31/00, B29C 49/12, B29C 49/64, B29C 49/78

(54) **VORRICHTUNG UND VERFAHREN ZUM HERSTELLEN VON KUNSTSTOFFBEHÄLTNISSEN MIT NICHT KREISFÖRMIGEN QUERSCHNITTEN**

(30) Priorität: 20.12.2021 DE 102021133797
(71) Anmelder: Krones AG, 93073 Neutraubling (DE)
(72) Erfinder: Steger, Sebastian, 93073 Neutraubling (DE); Schwoed, Gerhard, 93073 Neutraubling (DE); Eifler, Michael, 93073 Neutraubling (DE); Forsthoevel, Jochen, 93073 Neutraubling (DE); Philipp, Thomas, 93073 Neutraubling (DE); Moewes, Simon, 93073 Neutraubling (DE)
(74) Vertreter: Bittner, Bernhard

(57) **Zusammenfassung**

Vorrichtung (1) zum Herstellen von Kunststoffbehältnissen (10) mit einer Erwärmungseinrichtung (2) zum Erwärmen von Kunststoffvorformlingen (10), wobei die Erwärmungseinrichtung (2) eine Transporteinrichtung (22) aufweist, welche die Kunststoffvorformlinge entlang eines vorgegebenen Transportpfads (T) vereinzelt transportiert und diese Transporteinrichtung (22) eine Vielzahl von Halteeinrichtungen (26) zum Halten der Kunststoffvorformlinge (10) aufweist und wenigstens eine Erwärmungseinheit (24) vorgesehen ist, welche die Kunststoffvorformlinge (10) erwärmt, wobei weiterhin eine Dreheinrichtung (28) vorgesehen ist, welche die von den Halteeinrichtungen (26) gehaltenen Kunststoffvorformlinge (10) dreht und mit einer Umformungseinrichtung (4), welche die von der Erwärmungseinrichtung (2) transportierten Kunststoffvorformlinge (10) zu Kunststoffbehältnissen umformt, dadurch gekennzeichnet, dass die Vorrichtung (1) eine Ausrichteinrichtung (40) aufweist, welche eine Ausrichtung der Drehstellung der Kunststoffvorformlinge bezüglich deren Längsrichtung gegenüber den diese Kunststoffvorformlinge haltenden Halteeinrichtungen ermöglicht und/oder die Vorrichtung (1) eine entlang des Transportpfads angeordnete Drehstellungsausrichteinrichtung aufweist, welche eine Ausrichtung einer Drehstellung der Halteeinrichtungen mit den daran angeordneten Kunststoffvorformlingen ermöglicht.

## Beschreibung

Die vorliegende Erfindung bezieht sich auf eine Vorrichtung und ein Verfahren zum Herstellen von Kunststoffbehältnissen und insbesondere von Kunststoffbehältnissen mit nicht kreisförmigen Querschnitten. Aus dem Stand der Technik sind zahlreiche Vorrichtungen und Verfahren zum Herstellen von Kunststoffbehältnissen bekannt. Dabei werden üblicherweise Kunststoffvorformlinge erwärmt und in Umformungseinrichtungen wie etwa Blasformmaschinen (beispielsweise Streckblasmaschinen) zu Behältnissen umgeformt.

Dabei ist es aus dem Stand der Technik bekannt, auch Behältnisse zu blasen, welche andere als kreisförmige Querschnitte aufweisen, wie beispielsweise ovale Querschnitte. Dies ist mit Problemen verbunden, da nicht nur Blasformen eingesetzt werden müssen, welche von kreisförmigen Querschnitten abweichende Querschnitte aufweisen, sondern zusätzlich auch alternative Erwärmungen für die Kunststoffvorformlinge verwendet werden müssen.

Bei einem aus dem Stand der Technik bekannten Heizverfahren wird für die Erwärmung von Kunststoffvorformlingen zur Produktion nicht zylindrischer bzw. nicht ausreichend gleichförmiger Behälter ein Preferential Heating (bevorzugtes Heizverfahren) genutzt. Bei diesem Verfahren wird eine sinusoidale Temperaturverteilung in Tangentialrichtung an dem Kunststoffvorformling erreicht. Üblicherweise werden zwei thermische Maxima und zwei thermische Minima, welche sich jeweils gegenüberliegenden, angestrebt.

Die WO2021122712A1 beschreibt eine Vorrichtung zum Herstellen ovaler Behältnisse.

Um hieraus ovale Behältnisse in entsprechender Güte zu fertigen, müssen die Kunststoffvorformlinge stellungsgerecht in die Blasform eingegeben werden. Dies bedeutet, dass heiße Preform-Seiten und lange Behältnisseiten sowie kalte Preform-Seiten und kurze Behältnisseiten ausgerichtet sein müssen.

Die Anmelderin bietet für die Produktion solcher Behältnisse ein Pro-Shape-Verfahren an. Dabei wird der Kunststoffvorformling gleichmäßig erwärmt und anschließend mittels Prägeplatten zwei Seiten des Kunststoffvorformlings wieder abgekühlt. Sowohl für dieses Verfahren als auch für das Preferential Heating ist die orientierte Eingabe von Kunststoffvorformlingen in die Blasformen zwingend erforderlich.

Im Stand der Technik treten teilweise unterschiedliche Probleme auf. So ist es zum Teil schwierig, einen Übergabewinkel von +/-10 Grad einzuhalten. Daneben ist teilweise eine Bestimmung der Drehstellung der Kunststoffvorformlinge sehr aufwendig

Der vorliegenden Erfindung liegt die Aufgabe zugrunde, verbesserte Vorrichtungen und Verfahren zum Herstellen von Behältnissen mit nicht kreisförmigem Querschnitt vorzuschlagen. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Herstellen von Kunststoffbehältnissen weist eine Erwärmungseinrichtung zum Erwärmen von Kunststoffvorformlingen auf, wobei die Erwärmungseinrichtung eine Transporteinrichtung aufweist, welche die Kunststoffvorformlinge vereinzelt (also insbesondere mit einem vorgegebenen Abstand bezüglich einander) entlang eines vorgegebenen Transportpfads transportiert und diese Transporteinrichtung eine Vielzahl von Halteeinrichtungen zum Halten der Kunststoffvorformlinge aufweist und wenigstens eine Erwärmungseinheit vorgesehen ist, welche die Kunststoffvorformlinge erwärmt, wobei wenigstens eine Dreheinrichtung vorgesehen ist, welche die von den Halteeinrichtungen gehaltenen Kunststoffvorformlinge während ihres Transports durch die Erwärmungseinrichtung (und bevorzugt wenigstens auch zeitweise während deren Erwärmung) bezüglich deren Längsrichtungen dreht.

Weiterhin weist die Vorrichtung eine Umformungseinrichtung auf, welche die von der Erwärmungseinrichtung transportierten Kunststoffvorformlinge zu Kunststoffbehältnissen umformt, wobei diese Umformungseinrichtung wenigstens eine Umformungsstation aufweist, welche die Kunststoffvorformlinge durch Beaufschlagung mit einem fließfähigen und insbesondere gasförmigen Medium zu den Kunststoffbehältnissen umformt.

Weiterhin weist die Erwärmungseinrichtung bevorzugt eine Stelleinrichtung (bzw. eine Drehstellungsanpassungseinrichtung) auf, welche eine Einstellung einer Drehstellung der Kunststoffvorformlinge ermöglicht, wobei bevorzugt diese Stelleinrichtung wenigstens abschnittsweise entlang des Transportpfads der Kunststoffvorformlinge angeordnet ist.

Es wird darauf hingewiesen, dass im Folgenden der Begriff Stelleinrichtung verwendet wird, jedoch die entsprechende Einrichtung auch mit dem technisch genaueren Begriff Drehstellungsanpassungseinrichtung bezeichnet werden könnte.

Erfindungsgemäß weist die Vorrichtung eine Ausrichteinrichtung auf, welche eine Ausrichtung der Drehstellung der Kunststoffvorformlinge bezüglich deren Längsrichtung gegenüber den diese Kunststoffvorformlinge haltenden Halteeinrichtungen ermöglicht und/oder die Vorrichtung weist eine entlang des Transportpfads angeordnete Drehstellungsausrichteinrichtung auf, welche eine Ausrichtung einer Drehstellung der Halteeinrichtungen mit den daran angeordneten Kunststoffvorformlingen ermöglicht.

Bevorzugt handelt es sich dabei bei der oben erwähnten Stelleinrichtung und der Ausrichteinrichtung um unterschiedliche Einrichtungen, die bevorzugt beabstandet zueinander entlang des Transportpfads der Kunststoffvorformlinge angeordnet sind. Bei einer weiteren bevorzugten Ausführungsform ist diese Stelleinrichtung in der Transportrichtung der Kunststoffvorformlinge nach der Ausrichteinrichtung und/oder nach der Drehstellungsausrichtungseinrichtung angeordnet.

Bevorzugt weist die Vorrichtung eine erste entlang des Transportpfads der Kunststoffvorformlinge (und insbesondere entlang eines geradlinigen Abschnitts des Transportpfads) angeordnete Erfassungseinrichtung zur Erfassung einer Drehstellung der Kunststoffvorformlinge bezüglich deren Längsrichtung auf, wobei besonders bevorzugt die Kunststoffvorformlinge und insbesondere die von der Umformungseinrichtung umzuformenden Kunststoffvorformlinge und/oder die von der Erwärmungseinrichtung erwärmten Kunststoffvorformlinge wenigstens eine Markierung aufweisen, welche eine Erfassung der Drehstellung der Kunststoffvorformlinge ermöglicht.

Es ist dabei möglich, dass diese Markierung bereits an den hergestellten Kunststoffvorformlingen vorhanden ist, es wäre jedoch auch denkbar und bevorzugt, dass diese Markierung vor der Erwärmungseinrichtung an den Kunststoffvorformlingen angebracht wird, es wäre jedoch auch möglich, dass die Markierung während der Erwärmung aufgebracht wird, oder auch nach der Erwärmung der Kunststoffvorformlinge.

Bevorzugt ist die Erfassungseinrichtung dazu geeignet und bestimmt, eine Markierung der Kunststoffvorformlinge zu erfassen, um so die Drehstellung der Kunststoffvorformlinge zu bestimmen.

Bei einer weiteren erfindungsgemäßen Ausgestaltung erstreckt sich diese Stelleinrichtung wenigstens abschnittsweise entlang des Transportpfads der Kunststoffvorformlinge (und insbesondere entlang eines geradlinigen Abschnitts des Transportpfads) und die Vorrichtung weist bevorzugt eine erste entlang des Transportpfads der Kunststoffvorformlinge angeordnete Erfassungseinrichtung zur Erfassung einer Drehstellung der Kunststoffvorformlinge bezüglich deren Längsrichtung auf.

Bevorzugt weist die Transporteinrichtung der Erwärmungseinrichtung ein umlaufendes Transportmittel auf, an dem die Halteeinrichtungen angeordnet sind. Besonders bevorzugt handelt es sich bei diesem Transportmittel um eine Transportkette. Bevorzugt transportiert die Transporteinrichtung die Kunststoffvorformlinge wenigstens abschnittsweise entlang eines geradlinigen Transportpfads. Bevorzugt transportiert die Transporteinrichtung die Kunststoffvorformlinge wenigstens abschnittsweise entlang eines gekrümmten Transportpfads und insbesondere entlang eines kreisförmig gekrümmten Transportpfads.

Bevorzugt erfolgt eine Erwärmung der Kunststoffvorformlinge während eines geradlinigen Transports derselben.

Bei einer weiteren vorteilhaften Ausführungsform ist zwischen der Erwärmungseinrichtung und der Umformungseinrichtung eine weitere Transporteinrichtung vorgesehen, welche die Kunststoffvorformlinge transportiert. Bei dieser weiteren Transporteinrichtungen kann es sich beispielsweise um ein Transportrad oder einen Transportstern handeln, an dem bevorzugt ebenfalls Halteeinrichtungen zum Halten der Kunststoffvorformlinge angeordnet sind. Bei einer weiteren vorteilhaften Ausführungsform handelt es sich bei der Erwärmungseinrichtung um einen Ofen und insbesondere einen Infrarotofen, der die Kunststoffvorformlinge erwärmt. Bevorzugt sind die Heizeinrichtungen stationär angeordnet und die Kunststoffvorformlinge werden an diesen vorbeitransportiert. Bevorzugt ist eine Vielzahl von Heizeinrichtungen stationär entlang des Transportpfads der Kunststoffvorformlinge angeordnet. Bevorzugt sind diese Heizeinrichtungen entlang geradliniger Abschnitte des Transportpfads angeordnet. Bei der Erwärmungseinrichtung könnte es sich jedoch auch um einen Mikrowellenofen handeln.

Bei einer weiteren bevorzugten Ausführungsform ist eine Heizleistung der einzelnen Heizeinrichtungen steuerbar und insbesondere regelbar. Bevorzugt ist die Heizleistung der einzelnen Heizeinrichtungen unabhängig voneinander steuerbar und bevorzugt regelbar. Bevorzugt weist wenigstens eine Heizeinrichtung und weisen bevorzugt mehrere Heizeinrichtungen jeweils (in der Längsrichtung der Kunststoffvorformlinge übereinander angeordnete) Heizlampen auf, welche sich entlang der Transportrichtung der Kunststoffvorformlinge erstrecken. Bevorzugt ist eine Heizleistung dieser Heizlampen einstellbar.

Bevorzugt bewirkt die Stelleinrichtung, dass alle Kunststoffvorformlinge die Erwärmungseinrichtung in einer definierten Drehstellung verlassen. Bei einer weiteren vorteilhaften Ausführungsform weist die Erfassungseinrichtung eine Bildaufnahmeeinrichtung auf.

Bei einer besonders bevorzugten Ausführungsform weisen die Halteeinrichtungen jeweils Halteelemente in Form von Dornen auf, welche in die Mündungen der Kunststoffvorformlinge eingreifen, um diese zu halten. Bei einer bevorzugten Ausführungsform weist die Vorrichtung Bewegungseinrichtungen auf, welche die Haltedorne in die Kunststoffvorformlinge einführen. Bei einer bevorzugten Ausführungsform sind diese Halteelement nicht nur bezüglich einer vorgegebenen Drehachse und/oder der Längsrichtung der Kunststoffvorformlinge drehbar sondern bevorzugt auch in der Längsrichtung der Kunststoffvorformlinge bewegbar.

Bei einer bevorzugten Ausführungsform weist die Vorrichtung wenigstens eine Antriebseinrichtung auf, welche bewirkt, dass die einzelnen Kunststoffvorformlinge, die von unterschiedlichen Halteeinrichtungen gehalten werden in der gleichen Weise bezüglich ihrer Längsrichtung gedreht werden. Dabei ist es denkbar, dass die Drehbewegung der Kunststoffvorformlinge durch die Bewegung der Kunststoffvorformling entlang des Transportpfads bewirkt wird, etwa, in dem an den Halteeinrichtungen Zahnräder angeordnet sind, welche mit stationär angeordneten Zahnstangen zusammenwirken.

Bevorzugt ist die Umformungseinrichtung dazu geeignet und bestimmt, Kunststoffbehältnisse mit einem von einem kreisförmigen Querschnitt abweichenden Querschnitt herzustellen. Dabei kann es sich beispielsweise um einen polygonalen Querschnitt, um einen elliptischen Querschnitt, um einen ovalen Querschnitt und dergleichen handeln.

Bevorzugt weist die Umformungseinrichtung einen bewegbaren und insbesondere drehbaren Träger auf, an dem eine Vielzahl von Umformungsstationen zum Umformen der Kunststoffvorformlinge zu den Kunststoffbehältnissen angeordnet ist. Bevorzugt weisen diese Umformungsstationen jeweils Beaufschlagungseinrichtungen auf, welche die Kunststoffvorformlinge mit einem gasförmigen Medium beaufschlagen. Bevorzugt weisen die Umformungsstationen jeweils stangenartige Körper auf, welche in die Kunststoffvorformlinge einführbar sind, um diese in deren Längsrichtung zu dehnen.

Bevorzugt weis die Vorrichtung eine Zuordnungseinrichtung auf, welche jedem von der Erwärmungseinrichtung erwärmten Kunststoffvorformling eine bestimmte Umformungsstation zuordnet, welche diesen Kunststoffvorformling zu einem Kunststoffbehältnis umformt.

Bei einer weiteren Ausführungsform weist die Vorrichtung wenigstens eine Markierungseinrichtung auf, welche dazu geeignet und bestimmt ist, an den Kunststoffvorformlingen eine Markierung anzubringen, welche eine Erfassung einer Drehstellung der Kunststoffvorformlinge ermöglicht, wobei bevorzugt die Markierungseinrichtung eine lasergestützte Markierungseinrichtung oder eine Druckeinrichtung ist. Bevorzugt handelt es sich bei der Markierung um eine dauerhafte Markierung, welche bevorzugt während der gesamten Lebenszeit des aus dem Kunststoffvorformling gefertigten Behältnisses an diesem verbleibt. Bevorzugt handelt es sich bei der Markierung um eine optisch und berührungslos erfassbare Markierung.

Bevorzugt ist die Markierungseinrichtung entlang des Transportpfads der Kunststoffvorformlinge durch die Erwärmungseinrichtung vorgesehen. Besonders bevorzugt ist die Markierungseinrichtung näher an einem Ende der Transportstrecke entlang derer die Kunststoffvorformlinge erwärmt werden als am Anfang angeordnet. So ist es möglich, dass die Kunststoffvorformlinge zunächst geradlinig transportiert werden, anschließend in einem Umlenkbereich die Transportrichtung umgekehrt wird und schließlich die Kunststoffvorformlinge wieder zurück transportiert werden. Besonders bevorzugt ist die Markierungseinrichtung in diesem zweiten Transportpfadabschnitt, in dem die Kunststoffvorformlinge zurücktransportiert werden, angeordnet.

Besonders bevorzugt ist die Markierungseinrichtung dazu geeignet und bestimmt, in einem Gewindebereich und/oder an einen Tragring der Kunststoffvorformlinge die besagte Markierung anzubringen. Besonders bevorzugt kann es sich hierbei um (wenigstens) eine linienförmige Markierung handeln. Bei einer weiteren bevorzugten Ausführungsform bringt die Markierungseinrichtung die Markierung an einem Bereich des Kunststoffvorformlings an, der im späteren Verlauf der Herstellung des Kunststoffbehältnisses durch einen Behältnisverschluss und insbesondere einen Drehverschluss abgedeckt wird. Besonders bevorzugt bringt die Markierungseinrichtung die Markierung an einem Abschnitt des Kunststoffvorformlings an, der nicht bei dem Umformungsprozess gedehnt und/oder expandiert wird.

So ist es möglich, dass in einem Bereich einer Prozesskurve der Erwärmungseinrichtung und insbesondere des Preferential Heatings orthogonal zu einer Transportrichtung beispielsweise einer Kettenvorschubrichtung mittels der Markiereinrichtung die Markierung aufgebracht wird. So ist es bei entsprechender Justage des Markiersystems möglich, dass die Markierung stets mittig auf eine heiße Seite des Kunststoffvorformlings aufgebracht wird. Wie erwähnt, handelt es sich bei der Markierungseinrichtung bevorzugt um eine Lasereinrichtung oder um eine Druckeinrichtung.

Bei einer weiteren bevorzugten Ausführungsform weist die Vorrichtung eine Fülleinrichtung auf, welche in der Transportrichtung der Kunststoffbehältnisse nach der Umformungseinrichtung angeordnet ist und welche dazu geeignet und bestimmt ist, die Behältnisse mit einem fließfähigen Produkt zu befüllen. Bei diesem Produkt kann es sich beispielsweise um ein Lebensmittelprodukt handeln aber auch um andere Produkte, wie Öle, Reinigungsmittel oder dergleichen.

Bei einer weiteren bevorzugten Ausführungsform weist die Vorrichtung eine Verschließeinrichtung auf, welche dazu geeignet und bestimmt ist, die befüllten Behältnisse zu verschließen. Bevorzugt ist die Verschließeinrichtung dazu geeignet und bestimmt, Schraubverschlüsse an den Behältnissen anzubringen.

Bei einer weiteren vorteilhaften Ausführungsform weist die Vorrichtung eine Drehstellungskorrektureinrichtung auf, welche dazu geeignet und bestimmt ist, eine Drehstellung von Behältnissen in einer definierten Weise zu ändern, insbesondere um auf diese Weise eine (insbesondere durch eine Erfassungseinrichtung erfasste) Ist - Drehstellung an eine Soll - Drehstellung anzupassen.

Dabei ist es möglich, dass diese Markierung bereits während der Herstellung der Kunststoffvorformlinge, beispielsweise während des Spritzgießens auf den Kunststoffvorformling aufgebracht wird.

Daneben ist es auch möglich, dass keine extra Markierung auf dem Kunststoffvorformling angeordnet ist, sondern eine Detektion eines signifikanten Merkmals des Kunststoffvorformlings, beispielsweise eines Gewindes oder eines Gewindeabstandes (zum Beispiel der Abstand der ersten unteren Gewindeflanke zu einem Verschlussring) erfasst wird und die Lage dieser Markierung während des Erwärmungsprozesses und nach dem Umformungsprozess gemessen wird und auf diese Weise ein Übergabewinkel gemessen oder errechnet wird.

Bei einer weiteren bevorzugten Ausführungsform weist wenigstens eine Erfassungseinrichtung eine Bildaufnahmeeinrichtung auf, welche dazu geeignet ist, ein Bild der Kunststoffvorformlinge in einer zu deren Längsrichtung senkrechten Richtung aufzunehmen. Bevorzugt ist diese Erfassungseinrichtung dazu geeignet und bestimmt, mehrere seitliche Bilder des Kunststoffvorformlings aufzunehmen. Dabei wäre es möglich, dass mehrere Bildaufnahmeeinrichtungen vorgesehen sind, welche eine Bildaufnahme des Kunststoffvorformlings aus mehreren Richtungen ermöglichen. Auch wäre es denkbar, dass Spiegel verwendet werden, um eine Aufnahme des Kunststoffvorformlings aus mehreren Richtungen zu ermöglichen.

Bei einer weiteren bevorzugten Ausführungsform weist wenigstens eine Erfassungseinrichtung eine Bildaufnahmeeinrichtung auf, welche dazu geeignet ist, ein Bild der Kunststoffvorformlinge in deren Längsrichtung aufzunehmen. Diese Erfassungseinrichtung ist dabei insbesondere dazu geeignet und bestimmt, ein Bild eines Tragrings und/oder eines Gewindes des Behältnisses aufzunehmen.

Diese Vorgehensweise ist auch mittels eines Maschinenlernsystems und/oder einer künstlichen Intelligenz umsetzbar. So kann beispielsweise eine hohe Anzahl von Bildern eines drehenden Kunststoffvorformlings bei unterschiedlicher Beleuchtung aufgenommen werden und diese Bilder können entsprechend ausgewertet werden.

Sollte eine erforderliche Genauigkeit beispielsweise aufgrund einer zu flachen Geschwindesteigung nicht erreichbar sein, wäre es auch möglich, eine Optimierung durch eine zusätzliche Auswertung vertikaler Unterbrechungen des Gewindes durchzuführen.

Bei einer bevorzugten Ausführungsform ist die Stelleinrichtung eine mechanisch wirkende Stelleinrichtung. Bevorzugt weist die Stelleinrichtung eine Führungskurve auf, die mit wenigstens einer an der Halteeinrichtung angeordneten ersten Führungsrolle zusammenwirkt, um eine Drehstellung der Kunststoffvorformlinge einzustellen.

und bevorzugt weist die Stelleinrichtung eine an der Halteeinrichtung angeordnete Führungsrolle auf, die mit wenigstens einer ersten Führungskurve zusammenwirkt, um eine Drehstellung der Kunststoffvorformlinge einzustellen.

Bei einer bevorzugten Ausführungsform weist die Halteeinrichtung eine Platte auf, an der diese Führungsrolle angeordnet ist, wobei diese Führungsrolle bevorzugt exzentrisch angeordnet ist, sodass durch ein Verschwenken der Führungsrolle auch eine Drehbewegung der Halteeinrichtungen und insbesondere der daran gehaltenen Kunststoffvorformlinge auftritt.

Bevorzugt ist die Halteeinrichtung (oder sind Bestandteile der Halteeinrichtung) bezüglich einer Drehachse drehbar, die parallel zu der Längsrichtung der Kunststoffvorformlinge verläuft. Besonders bevorzugt ist auch die besagte Führungsrolle bezüglich einer Drehachse drehbar, die parallel zu der Längsrichtung der Kunststoffvorformlinge ist.

Bevorzugt weist die Stelleinrichtung wenigstens zwei und bevorzugt wenigstens drei Führungskurven auf, welche entlang des Transportpfads der Kunststoffvorformlinge hintereinander angeordnet sind. Dabei kann es sich bei der ersten Führungskurve um eine Fangkurve handeln, welche die Position der Führungsrolle vorbestimmt. Bei einer weiteren Ausführungsform handelt es sich bei den zweiten Führungskurve um eine Führungskurve, welche eine Ausrichtung der Führungsrolle bewirkt.

Bei einer weiteren bevorzugten Ausführungsform ist wenigstens eine und besonders bevorzugt sind mehrere dieser Führungskurven in einem geradlinigen Abschnitt des Transportpfads angeordnet. Bevorzugt verläuft wenigstens eine dieser Führungskurven und besonders bevorzugte verlaufen mehrere dieser Führungskurven geradlinig.

Bei einer weiteren vorteilhaften Ausführungsform ist wenigstens eine Führungskurve verstellbar, um die Drehstellung der Kunststoffvorformlinge zu verändern. Bevorzugt ist dabei eine Verstellung dieser Führungskurve in Abhängigkeit von einer Drehstellung des Kunststoffvorformlings durchführbar und insbesondere einer Drehstellung, welche durch die wenigstens eine Erfassungseinrichtung ermittelt wird oder wurde. Besonders bevorzugt ist diese Führungskurve senkrecht zu dem Transportpfad der Kunststoffvorformlinge veränderbar und insbesondere in einer horizontalen Ebene. Besonders bevorzugt ist die besagten Führungskurve linear verschiebbar, und auf diese Weise kann eine Winkelstellung der Führungsrolle verändert werden.

Bei einer besonders bevorzugten Ausführungsform ist die oben erwähnte Erfassungseinrichtung entlang der Stelleinrichtung angeordnet. Dies bedeutet, dass die Drehstellung der Kunststoffvorformlinge erfasst wird, während diese mit den besagten Führungskurven ausgerichtet werden.

Bei einer weiteren vorteilhaften Ausführungsform ist die Erfassungseinrichtung dazu geeignet und bestimmt, eine Position der Führungsrolle gegenüber einer Längsrichtung der Halteeinrichtungen und/oder gegenüber einer Längsrichtung des Kunststoffvorformlings zu erfassen.

Dabei ist es möglich, dass die Führungsrolle bzw. Anlenkrolle (beispielsweise der Schaltzeitpunkt eines Sensors) mit einem Grob- oder Feintakt abgeglichen wird, um eine Aussage darüber zu treffen, ob eine Spindel (bzw. eine Halteeinrichtung) vor oder nach allen (betrachtet in der Transportrichtung der Kunststoffvorformlinge) ausgerichtet ist.

Hierbei handelt es sich um eine bevorzugte Lösung. Alternativ könnte auch der zeitliche Abstand zwischen detektierten Anlenkrollen bzw. Führungsrollen betrachtet werden, da angenommen werden kann, dass die meisten Spindeln korrekt orientiert sind. Auf diese Weise könnte man aus einem zu kurzen Zeitintervallen gegenüber einem Soll-Zeitintervall zwischen zwei detektierten Anlenkrollen schließen, dass die zuletzt detektierte Anlenkrolle fälschlicherweise voreilend ausgerichtet war. Daneben wäre es auch möglich, dass aus einem zu großen Zeitintervall gegenüber dem Soll-Zeitintervall zwischen zwei Detektionen geschlossen wird, dass die zuletzt detektierte Anlenkrolle und/oder Spindel nun wieder korrekt ausgerichtet ist.

Bei einer weiteren vorteilhaften Ausführungsform weist die Vorrichtung eine Prozessoreinrichtung auf, welche dazu geeignet und bestimmt ist, aus von der Erfassungseinrichtung ausgegebenen Werten eine Aussage über einen charakteristischen Zustand einer Stelleinrichtung zu ermitteln. So kann beispielsweise festgestellt werden, dass eine Häufung von Fehlerzuständen auftritt. Auf diese Weise kann etwa auf einen Verschleiß der Führungsrolle oder der Führungskurven geschlossen werden.

Bei einer weiteren vorteilhaften Ausführungsform ist die Erfassungseinrichtung dazu geeignet und bestimmt, berührungslos einen Fehlerzustand der Stelleinrichtung zu erfassen.

Bei einer weiteren vorteilhaften Ausführungsform weist die Stelleinrichtung ein erstes Stellmittel auf, welches dazu geeignet und bestimmt ist, die Führungsrolle in eine erste vorgegebene Position bezüglich der Längsrichtung zu bewegen und/oder zu schwenken. Dabei ist es möglich, dass dieses erste Stellmittel kammartig und/oder bürstenartig ausgeführt ist und zur Vororientierung der Führungsrollen bzw. Anlenkrollen in einen vorgegebenen Winkel dient.

Bei einer weiteren vorteilhaften Ausführungsform weist die Stelleinrichtung ein zweites Stellmittel auf, welches bevorzugt in der Transportrichtung der Kunststoffvorformlinge nach dem ersten Stellmittel angeordnet ist und welches dazu geeignet und bestimmt ist, die Führungsrolle in eine erste vorgegebene Position bezüglich der Längsrichtung zu bewegen oder zu schwenken.

Bei einer bevorzugten Ausführungsform ist die Markierung der Kunststoffvorformlinge in einem Bereich einer Mündung und/oder in einem Bodenbereich des Kunststoffvorformlings, insbesondere einem Bodenkuppenbereich angeordnet. Bevorzugt kann die Mündung in einem Bereich des Kunststoffvorformlings angeordnet sein, der bei dem Umformungsprozess nicht verstreckt wird oder auch in einem Bereich, der bei dem Umformungsprozess nicht verstreckt wird (insbesondere dem Gewindebereich und/oder dem Mündungsbereich).

Bevorzugt wird die Markierung in einem Bereich entlang dessen Transportpfad angebracht, in dem keine Drehung des Kunststoffvorformlings bezüglich seiner Längsrichtung erfolgt. Bevorzugt wird die Markierung in einem Bereich entlang dessen Transportpfad angebracht in dem eine Drehung des Kunststoffvorformlings bzgl. seiner Längsrichtung verhindert ist, insbesondere in einem Bereich der oben erwähnten Kurven und/oder der Stelleinrichtung.

Die Aufbringung der Markierung kann dabei beispielsweise mittels Laser oder mittels eines Stempelwerkzeugs oder eines Aufdrucks erfolgen.

Die Anbringung der Markierung in einem Bodenkuppenbereich hat den Vorteil einer erleichterten axialen Inspektion, welche in der Regel genauer ist als eine radiale Inspektion. Eine Inspektionseinheit zum Bewerkstelligen dieser Inspektion ist aus der DE 10 2006 047150A1 bekannt.

Bei einer weiteren bevorzugten Ausführungsform ist die Ausrichteinrichtung im Bereich einer Zuführeinrichtung angeordnet welche der Erwärmungseinrichtung die Kunststoffvorformlinge zuführt.

Bei dieser Zuführeinrichtung kann es sich beispielsweise um einen sog. Zuführstern oder ein Zuführrad handeln, welches die Kunststoffvorformlinge der Erwärmungseinrichtung zuführt.

Besonders bevorzugt handelt es sich bei der Zuführeinrichtung um eine Vereinzelungseinrichtung, welche zuzuführende Kunststoffvorformlinge vereinzelt und/oder zwischen diesen eine Lücke erzeugt. Besonders bevorzugt handelt es sich bei der Vereinzelungseinrichtung um einen Eintaktstern, der bevorzugt an seinem Außenumfang Ausnehmungen zur Aufnahme der einzelnen Kunststoffvorformlinge aufweist. Bei einer weiteren bevorzugten Ausführungsform kann jedoch sowohl eine Vereinzelungseinrichtung vorgesehen sein als auch eine dieser Vereinzelungseinrichtung nachgeschaltete Ausrichteinrichtung wie ein Ausrichtkarussell.

Bei einer weiteren bevorzugten Ausführungsform weist die Ausrichteinrichtung eine Inspektionseinrichtung auf, welche die Kunststoffvorformlinge inspiziert und welche insbesondere eine Drehstellung der Kunststoffvorformlinge bezüglich deren Längsrichtungen ermittelt.

Diese Inspektionseinrichtung weist dabei bevorzugt eine Bildaufnahmeeinrichtung auf, welche ein ortsaufgelöstes Bild der Kunststoffvorformlinge aufnimmt und auf diese Weise die Drehstellung derselben ermittelt. Dies kann dabei mittels der oben erwähnten Markierung der Kunststoffvorformlinge erfolgen.

Bei einer bevorzugten Ausführungsform ist diese Inspektionseinrichtung in dem Bereich der Zuführeinrichtung angeordnet, beispielsweise im Bereich eines Sägezahnsterns. Es wäre jedoch auch möglich, dass diese Inspektionseinrichtung in einem Bereich der Erwärmungsstrecke der Kunststoffvorformlinge angeordnet ist oder in dem oben erwähnten Umlenkbereich, in dem die Bewegungsrichtung der Kunststoffvorformlinge umgekehrt wird.

Bei einer bevorzugten Ausführungsform weist die die Ausrichteinrichtung eine Lagesicherungseinrichtung auf, welche eine Drehposition der Kunststoffvorformlinge (insbesondere vorrübergehend) arretiert.

So wäre es möglich, dass der oder die Kunststoffvorformlinge über eine Einlaufsperre und einen Sägezahnstern einem Ausrichtkarusell zugeführt wird/werden.

In diesem Ausrichtkarusell kann der Kunststoffvorformling zunächst an einer Halteeinrichtung angeordnet und insbesondere auf einen Haltedorn aufgesteckt werden. Anschließend wird bevorzugt die Drehstellung des Kunststoffvorformlings erfasst. In einem weiteren Schritt wird bevorzugt die Halteeinrichtung und insbesondere der Haltedorn hinsichtlich seiner Drehstellung ausgerichtet.

Anschließend wird bevorzugt der Kunststoffvorformling von der Halteeinrichtung, insbesondere dem Haltedorn an eine weitere Halteeinrichtung und insbesondere eine Greifklammer übergeben. Bevorzugt wird anschließend der Kunststoffvorformling von dieser Greifklammer an eine der oben genannten Halteeinrichtungen der Erwärmungseinrichtung und insbesondere an einen Haltedorn übergeben.

Bei einer bevorzugten Ausführungsform weist die Ausrichteinrichtung erste Halteeinrichtungen zum Halten der Kunststoffvorformlinge auf. Bevorzugt handelt es sich bei diesen Halteeinrichtungen um Haltedorne, welche in die Mündungen der Kunststoffvorformling einführbar sind. Besonders bevorzugt sind diese ersten Halteeinrichtung bezüglich der Längsrichtung der Kunststoffvorformlinge drehbar.

Bevorzugt weist die Ausrichteinrichtung zweite Halteeinrichtungen auf. Bevorzugt handelt es sich bei diesen zweiten Halteeinrichtungen um Greifklammern, welche die Kunststoffvorformlinge (insbesondere im Bereich ihrer Mündungen) greifen.

Bei einer bevorzugten Ausführungsform weist die Ausrichteinrichtung eine Spüleinrichtung zum Spülen der Kunststoffvorformlinge auf. Oftmals weisen derartige Vorrichtungen Spüleinrichtungen auf, welche die Kunststoffvorformlinge vor deren Erwärmung beispielsweise mit Spülluft spülen. Es wird hier vorgeschlagen, dass diese Spüleinrichtung (bzw. die Transporteinrichtung, an der sie angeordnet ist) auch zur Ausrichtung der Kunststoffvorformlinge verwendet wird.

Bei einer weiteren bevorzugten Ausführungsform weist die Ausrichteinrichtung eine Dreheinrichtung auf, welche die Kunststoffvorformlinge und/oder die Halteeinrichtung bezüglich der Längsachse der Kunststoffvorformlinge dreht, um eine relative Drehstellung der Kunststoffvorformlinge gegenüber den Halteeinrichtungen zu ändern.

Dabei ist es auch hier möglich, dass eine Inspektionseinrichtung zunächst die Drehstellung der Kunststoffvorformlinge erfasst, was beispielsweise im Bereich des oben erwähnten Sägezahnsterns erfolgen kann. Dabei kann optional eine Sicherung der Drehlage der Kunststoffvorformlinge erfolgen.

In einem weiteren Schritt kann die Halteinrichtung, beispielsweise der Haltedorn in eine vorgegebene Drehstellung gedreht werden, um eine orientierte Aufsteckung der Kunststoffvorformlings zu erreichen.

Bei einer bevorzugten Ausführungsform ist daher eine Position und insbesondere eine Drehstellung der Halteeinrichtung, insbesondere eines Haltedorns in dem Bereich, in dem diese in den Kunststoffvorformling eingeführt wird, einstellbar.

Auf diese Weise kann ein Versatzwinkel des Kunststoffvorformlings bzw. dessen Markierung zu einer Anlenkrolle und/oder der Stelleinrichtung eingestellt werden.

Auf diese Weise kann ein (hinsichtlich der Drehstellung) orientiertes Aufstecken der Kunststoffvorformlinge erfolgen.

Bei einer weiteren bevorzugten Ausführungsform weist die Erwärmungseinrichtung wenigstens eine Antriebseinrichtung zum Drehen der Halteeinrichtungen auf und bevorzugt ist diese Antriebseinrichtung wenigstens abschnittsweise von der Halteeinrichtung hinsichtlich dieser Drehbewegung entkoppelbar.

Durch diese Entkoppelung ist bevorzugt ein freies Drehen der Halteeinrichtungen möglich. Bevorzugt ist diese Entkoppelung wenigstens in dem Bereich eines Umlenkrades der Erwärmungseinrichtung möglich.

Auch bei dieser Ausgestaltung ist eine Ausrichtung der Kunststoffvorformlinge möglich, insbesondere jedoch während deren Transport durch die Erwärmungseinrichtung. Bevorzugt erfolgt bei dieser Ausgestaltung eine Umorientierung im Bereich er Umlenkung während der Erwärmung.

Bei dieser Ausführungsform kann der Kunststoffvorformling zunächst in beliebiger Drehstellung an der Halteeinrichtung angeordnet werden und insbesondere auf einen Haltedorn aufgesteckt werden. Bevorzugt wird in dieser Orientierung zunächst ein Standard - Erwärmungsprozess durchgeführt, d.h. insbesondere wird der Kunststoffvorformling an einem ersten Anteil an Erwärmungseinheiten vorbeigeführt. Auf diese Weise liegt hier bevorzugt ein Standardheizprozess, insbesondere in einem Kettenvorlauf der Erwärmungseinrichtung, vor.

Im Bereich der Umlenkung wird bevorzugt die Drehbewegung entkoppelt bzw. ein Freilauf der Drehung verwendet. Bevorzugt wird hier also die Drehung der Halteeinrichtung mit dem daran angeordneten Kunststoffvorformling von einem Antrieb entkoppelt. Wie oben erwähnt, kann die Drehbewegung beispielsweise dadurch erzeugt werden, dass die Vorrichtung eine Zahnstange aufweist, der gegenüber Zahnräder der einzelnen Halteeinrichtung abrollen. Diese Kopplung kann, wie erwähnt, zeitweise, insbesondere zum Zweck der Ausrichtung entkoppelt werden.

Während dieser Entkopplung werden bevorzugt die Halteeinrichtung und/oder der Kunststoffvorformling gedreht, bis eine Soll-Lage erreicht wird. Hierzu ist es möglich, dass zunächst eine Inspektion und anschließend eine Umorientierung, beispielsweise mittels Antrieben erfolgt. Optional kann auch hier eine Drehlagesicherung vorgesehen sein, welche die Drehstellung der Halteinrichtung und/oder des Kunststoffvorformlings (der insbesondere drehfest an der Halteeinrichtung angeordnet ist) sichert.

Zusätzlich oder alternativ wäre es auch möglich, dass eine Rotation der Halteeinrichtung und/oder des Kunststoffvorformlings bis zu einem (mechanischen) Anschlag erfolgt, um eine definierte Lage zu erreichen. Optional kann auch hier eine (insbesondere mechanische) Lagesicherung der Drehlage vorgesehen sein.

Die vorliegende Erfindung ist weiterhin auf ein Verfahren zum Herstellen von Kunststoffbehältnissen gerichtet, wobei Kunststoffvorformlinge mit einer Erwärmungseinrichtung erwärmt werden, wobei die Erwärmungseinrichtung eine Transporteinrichtung aufweist, welche die Kunststoffvorformlinge entlang eines vorgegebenen Transportpfads vereinzelt transportiert und diese Transporteinrichtung eine Vielzahl von Halteeinrichtungen aufweist, welche die Kunststoffvorformlinge halten und wenigstens eine Erwärmungseinheit vorgesehen ist, welche die Kunststoffvorformlinge erwärmt, und wobei weiterhin eine Dreheinrichtung die von den Halteeinrichtungen gehaltenen Kunststoffvorformlinge während ihres Transports durch die Erwärmungseinrichtung bezüglich deren Längsrichtungen dreht und wobei weiterhin eine Umformungseinrichtung die von der Erwärmungseinrichtung transportierten Kunststoffvorformlinge zu Kunststoffbehältnissen umformt, wobei diese Erwärmungseinrichtung wenigstens eine Umformungsstation aufweist, welche die Kunststoffvorformlinge durch Beaufschlagung mit einem fließfähigen (und insbesondere gasförmigen) Medium zu den Kunststoffbehältnissen umformt.

Weiterhin weist bevorzugt die Erwärmungseinrichtung eine Stelleinrichtung auf, welche eine Drehstellung der Kunststoffvorformlinge (insbesondere während deren Transport entlang deren Transportpfad) ändert und eine erste entlang des Transportpfads der Kunststoffvorformlinge angeordnete Erfassungseinrichtung erfasst die Drehstellung der Kunststoffvorformlinge bezüglich deren Längsrichtung.

Erfindungsgemäß ermöglicht eine Ausrichteinrichtung eine Ausrichtung der Drehstellung der Kunststoffvorformlinge bezüglich deren Längsrichtung gegenüber den diese Kunststoffvorformlinge haltenden Halteeinrichtungen und/oder eine Drehstellungsausrichteinrichtung ermöglicht eine Ausrichtung der Drehstellung der Halteeinrichtungen mit den daran angeordneten Kunststoffvorformlingen.

Bei einem vorteilhaften Verfahren weisen die von der Erwärmungseinrichtung erwärmten Kunststoffvorformlinge wenigstens eine Markierung auf, welche eine Erfassung der Drehstellung der Kunststoffvorformlinge ermöglicht.

Bei einem weiteren vorteilhaften Verfahren erfasst eine zweite entlang des Transportpfads angeordnete Erfassungseinrichtung eine Drehstellung der Kunststoffvorformlinge.

Bei einem vorteilhaften Verfahren bringt eine Markierungseinrichtung an den Kunststoffvorformlingen eine Markierung an, welche die Erfassung der Drehstellung der Kunststoffvorformlinge bezüglich deren Längsrichtung ermöglicht, wobei die Markierung bevorzugt während der Erwärmung der Kunststoffvorformlinge angebracht wird.

Bei einer weiteren vorteilhaften Ausführungsform wird die Drehstellung der Kunststoffvorformlinge mittels einer mechanischen Stelleinrichtung und insbesondere mittels wenigstens einer und bevorzugt mehreren Führungskurven verändert. Bevorzugt erfolgt eine Verstellung dieser Führungskurve in Abhängigkeit von einer Drehstellung des Kunststoffvorformlings. Besonders bevorzugt wird die Drehstellung des Kunststoffvorformlings durch die wenigstens eine Erfassungseinrichtung ermittelt.

Bei einem weiteren bevorzugten Verfahren wird die Markierung in einem Bereich der Stelleinrichtung angebracht, d.h. insbesondere während die Kunststoffvorformlinge durch die Stelleinrichtung transportiert werden.

Bevorzugt wird in dem Bereich der preferential heating Prozesskurve, d.h. bevorzugt während die preferential heating Spindeln in der Kurve geführt sind und somit deren Orientierung bekannt ist, eine Markierung, insbesondere im Kuppenbereich der Kunststoffvorformlinge, insbesondere mit einem Laser bzw. Druckverfahren oder mechanisch z.B. durch einen Stempel aufgebracht.

Bei einem weiteren bevorzugten Verfahren erfasst eine Erfassungseinrichtung eine Position der Markierung und erfasst bevorzugt die Position der Markierung unmittelbar vor dem Umformungsprozess oder nach dem Umformungsprozess.

Bei einem weiteren bevorzugten Verfahren erfolgt die Ausrichtung der Drehstellung der Kunststoffvorformlinge bezüglich deren Längsrichtung gegenüber den diese Kunststoffvorformlinge haltenden Halteeinrichtungen vor der Erwärmung der Kunststoffvorformlinge oder die Drehstellungsausrichtung der Halteeinrichtungen mit den daran angeordneten Kunststoffvorformlingen erfolgt während des Transports der Kunststoffvorformlinge durch die Erwärmungseinrichtung.

Bei einem weiteren bevorzugten Verfahren erfolgt die Ausrichtung der Drehstellung der Kunststoffvorformlinge bezüglich deren Längsrichtung gegenüber den diese Kunststoffvorformlinge haltenden Halteeinrichtungen vor der Erwärmung der Kunststoffvorformlinge oder die Drehstellungsausrichtung der Halteeinrichtungen mit den daran angeordneten Kunststoffvorformlingen erfolgt während des Transports der Kunststoffvorformlinge durch die Erwärmungseinrichtung.

Bei einem weiteren bevorzugten Verfahren erfolgt eine Ausrichtung der Kunststoffvorformlinge hinsichtlich deren Drehstellung, während diese mittels einer Zuführeinrichtung und insbesondere mittels eines Sägezahnsterns transportiert werden.

Besonders bevorzugt erfolgt im Rahmen dieser Ausrichtung eine Inspektion der Kunststoffvorformlinge, insbesondere um deren Drehstellung bezüglich deren Längsachse zu ermitteln.

Bevorzugt werden die Kunststoffvorformlinge umorientiert und insbesondere bezüglich deren Längsrichtungen gedreht. Optional kann auch eine (insbesondere mechanische) Lagesicherung der Kunststoffvorformlinge vorgenommen werden.

Alternativ wäre es auch möglich, dass die Kunststoffvorformlinge bis zu einem mechanischen Anschlag gedreht werden, um eine definierte Lage und/oder Drehorientierung zu erreichen. Auch hier wäre es wieder möglich, eine (insbesondere mechanische) Lagesicherung vorzunehmen.

Bei einer bevorzugten Ausführungsform wird eine Halteeinrichtung, wie etwa ein Dorn oder eine Spindel mittels einer Anlenkrolle orientiert zu einem Aufsteckpunkt, an dem sie in die Kunststoffvorformlinge eingeführt wird, geführt. Auf diese Weise kann eine Drehstellung dieser Halteeinrichtung bzw. dieses Haltedorns konstant gehalten werden.

Weitere Vorteile und Ausführungsformen ergeben sich aus den beigefügten Zeichnungen.

Darin zeigen:
- Fig. 1: eine schematische Darstellung einer erfindungsgemäßen Vorrichtung;
- Fig. 2: eine Darstellung einer Halteeinrichtung zum Halten der Kunststoffvorformlinge;
- Fig. 3: eine Draufsicht auf die Halteeinrichtung aus Figur 2;
- Fig. 4: eine Detaildarstellung der Erwärmungseinrichtung;
- Fig. 5: eine Darstellung der Stelleinrichtung zum Ändern der Drehstellung der Kunststoffvorformlinge;
- Fig. 6: eine Darstellung zur Veränderung der Drehstellung der Kunststoffvorformlinge;
- Fig. 7: eine weitere Darstellung einer Halteeinrichtung zum Halten der Kunststoffvorformlinge; und
- Fig. 8: eine Draufsicht auf die Halteeinrichtung aus Figur 7.

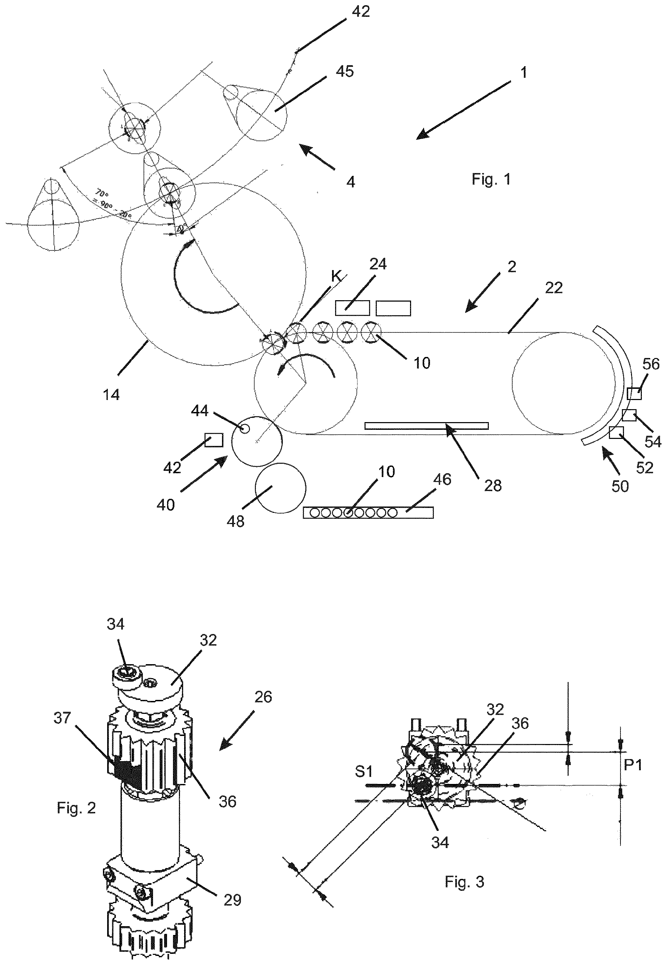

Figur 1 zeigt eine schematische Darstellung einer Vorrichtung 1 zum Herstellen von Behältnissen. Dabei bezieht sich das Bezugszeichen 2 auf eine Erwärmungseinrichtung wie einen Ofen, welcher Kunststoffvorformlinge 10 erwärmt. Bevorzugt handelt es sich dabei um eine Infrarot - Erwärmungseinrichtung. Diese Erwärmungseinrichtung weist eine nur schematisch dargestellte Transporteinrichtung 22 auf, welche hier als umlaufende Kette ausgebildet ist, an der eine Vielzahl von Halteeinrichtungen (nicht gezeigt) zum Halten der Kunststoffvorformlinge 10 angeordnet ist.

Das Bezugszeichen 24 kennzeichnet eine Heizeinrichtung, wie etwa einen Heizkasten, der bevorzugt stationär bezüglich der Transporteinrichtung 22 angeordnet ist, und an dem die Kunststoffvorformlinge vorbei transportiert werden. Bei einer bevorzugten Ausführungsform sind auch an der Innenseite des Transportpfads Heizeinrichtungen vorgesehen.

Bei einer bevorzugten Ausführungsform weist die Erwärmungseinrichtung auch Kühleinrichtungen auf, welche dazu geeignet sind, eine Oberfläche der Kunststoffvorformlinge zu Kühlen, etwa durch Beaufschlagung mit Luft. Auf diese Weise kann eine gleichmäßige Erwärmung der Kunststoffvorformlinge entlang deren Wandung erreicht werden.

Wie eingangs erwähnt, sollen die Kunststoffvorformlinge an bevorzugten Bereichen 10a erwärmt werden, hier an den in Figur 1 gezeigten Bereichen. Zu diesem Zweck werden die Kunststoffvorformlinge in ihrer Drehung ausgerichtet, sodass manche Abschnitte 10a stärker erwärmt werden als andere.

Die so erwärmten Kunststoffvorformlinge werden mittels einer Transporteinrichtung 14, wie einem Transportstern an die in ihrer Gesamtheit mit 4 bezeichnete Umformungseinrichtung übergeben. Diese weist eine Vielzahl von Umformungsstationen 45 auf, die an einer Transporteinrichtung 42 wie ein Blasrad angeordnet ist. In diesen Umformungsstationen bzw. in Blasformen werden die Kunststoffvorformlinge eingegeben und zu Behältnissen umgeformt.

Zwischen der Erwärmungseinrichtung können auch mehrere Transporteinrichtungen wie etwa Transportsterne, beispielsweise wenigstens zwei und bevorzugt wenigstens drei Transporteinrichtungen angeordnet sein.

In den mit K gekennzeichneten Bereich kann eine Korrektur der Drehstellung der Kunststoffvorformlinge vorgenommen werden. In der Umformungseinrichtung 4 werden die stärker erwärmten Oberflächen der Kunststoffvorformlinge an den jeweils längeren Seiten der Blasformen ausgerichtet. Bevorzugt werden die Kunststoffvorformlinge derart ausgerichtet, dass eine Trennseite bzw. Trennebene an der Schmalseite des Behältnisses angeordnet ist. Das Bezugszeichen 28 kennzeichnet grob schematisch eine Antriebseinrichtung bzw. Dreheinrichtung zum Drehen der Kunststoffvorformlinge 10 bezüglich ihrer Längsrichtungen. Dabei kann diese Antriebseinrichtung beispielsweise als Zahnstange ausgeführt sein, welche mit Zahnrädern (nicht gezeigt), welche den einzelnen Halteeinrichtungen der Kunststoffvorformlinge zugeordnet sind, ineinandergreift.

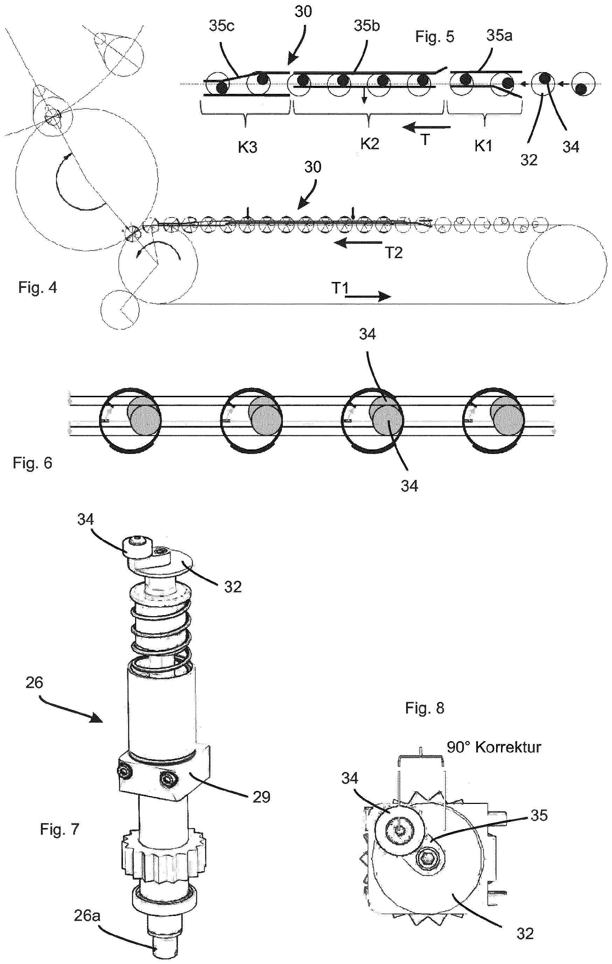

Bevorzugt sind die Halteeinrichtungen jeweils mit einer Kopplungseinrichtung ausgestattet (nicht gezeigt), welche eine Kopplung der Drehbewegung des Zahnrads und der einzelnen Halteelemente wie Haltedorne aufheben kann, so dass wenigstens abschnittsweise die Halteeinrichtungen 26a (vgl. Fig. 7) frei drehbar sind.

Das Bezugszeichen 40 kennzeichnet eine Ausrichteinrichtung, welche dazu dient, die Drehstellung der Kunststoffvorformlinge gegenüber den sie haltenden Halteeinrichtungen auszurichten. Diese Ausrichteinrichtung 40 weist bevorzugt eine Inspektionseinrichtung 42 auf, welche eine Drehstellung der Kunststoffvorformlinge 10 erfasst. Daneben ist eine Dreheinrichtung vorgesehen, welche die Drehstellung der Kunststoffvorformlinge ändert, insbesondere die Kunststoffvorformlinge in eine Solldrehposition dreht.

Das Bezugszeichen 46 kennzeichnet eine Vorformlingszuführeinrichtung wie eine Zuführschiene, welche die Kunststoffvorformlinge 10 hintereinander der Ausrichteinrichtung 40 zuführt. Das Bezugszeichen 48 kennzeichnet eine Vereinzelungseinrichtung, welche die in einer Reihe zugeführten Kunststoffvorformlinge 10 vereinzelt. Bei dieser Vereinzelungseinrichtung kann es sich um einen Sägezahnstern handeln.

Das Bezugszeichen 50 kennzeichnet eine Drehstellungsausrichtungseinrichtung, welche anstelle oder zusätzlich zu der Ausrichteinrichtung vorgesehen sein kann. Diese Drehstellungsausrichtungseinrichtung ist dabei bevorzugt in einem Umlenkbereich der Erwärmungseinrichtung 2 angeordnet. Das Bezugszeichen 52 kennzeichnet eine Inspektionseinrichtung, welche eine Drehstellung der (von den Halteeinrichtungen wie insbesondere Haltedornen) gehaltenen Kunststoffvorformlinge 10 erfasst.

Das Bezugszeichen 54 kennzeichnet eine Entkopplungseinrichtung, welche eine Kopplung zwischen der Antriebseinrichtung 28 und den Halteeinrichtungen zumindest kurzzeitig aufhebt so dass die Kunststoffvorformlinge frei bezüglich ihrer Längsrichtungen sind. Das Bezugszeichen 56 kennzeichnet eine Drehstellungsanpassungseinrichtung, welche eine Drehstellung der Kunststoffvorformlinge auf eine Sollposition anpasst.

Es wäre jedoch auch möglich, dass in dem Bereich der Umlenkung die Antriebseinrichtung wie etwa eine Zahnstange nicht vorhanden ist und aus diesem Grunde die Halteeinrichtungen mit den daran angeordneten Kunststoffvorformlingen frei drehbar sind.

Figur 2 zeigt eine Darstellung einer Halteeinrichtung 26. Diese weist einen Träger 29 auf, der an einem umlaufenden Transportmittel wie einer Transportkette angeordnet sein kann. Das Bezugszeichen 32 kennzeichnet eine drehbare Platte, an der eine Kurvenrolle 34 angeordnet ist. Diese Platte ist dabei bezüglich der Längsrichtung L drehbar. Diese Längsrichtung entspricht auch der Längsrichtung des (nicht gezeigten) Kunststoffvorformlings.

Das Bezugszeichen 36 kennzeichnet ein Zahnrad bzw. einen Zahnkranz, der bezüglich einer (nicht gezeigten) stationären Zahnstange abrollen kann bzw. in diese eingreifen kann. Zwischen diesem Zahnkranz und dem (nicht gezeigten) Haltedorn kann eine Kopplungseinrichtung (nicht gezeigt) angeordnet sein, welche die Drehbewegung des Zahnkranzes von der Drehbewegung des Kunststoffvorformlings entkoppeln kann.

Das Bezugszeichen 37 kennzeichnet eine Ausrichtfläche, welche zu einer Vorausrichtung der Drehstellung des Kunststoffvorformlings dient. Auf diese Weise kann eine definierte Drehstellung des Kunststoffvorformlings erreicht werden.

Figur 3 zeigt eine Draufsicht auf die in Figur 2 gezeigte Halteeinrichtung. Auch hier ist wieder die Kurvenrolle 34 vorgesehen, welche an der drehbaren Platte 32 angeordnet ist. Auch ist das Zahnrad 36 zu erkennen.

Das Bezugszeichen P1 kennzeichnet ein Verfahrweg einer entsprechenden Führungskurve, wenn eine Winkelkorrektur, beispielsweise um 90° vorgenommen werden soll. Das Bezugszeichen S1 kennzeichnet eine Kurvenstellung bei einem gerichteten heizen bzw. einer bevorzugten Erwärmung bestimmter Bereiche des Kunststoffvorformlings.

Figur 4 zeigt eine Detaildarstellung der in Figur 1 gezeigten Vorrichtung. Dabei kennzeichnet das Bezugszeichen 30 eine Stelleinrichtung, welche zur Ausrichtung der Kunststoffvorformlinge bzw. deren Drehstellung dient. Bevorzugt ist diese Stelleinrichtung in der zweiten Hälfte des Transportpfades, entlang dessen die Kunststoffvorformlinge während ihrer Erwärmung transportiert werden, angeordnet.

Figur 5 zeigt eine detaillierte Darstellung dieser Stelleinrichtung. Diese weist hier entlang des Transportpfads T hintereinander angeordnete Kurvensegmente 35a, 35b und 35c auf. Dabei kennzeichnet das Bezugszeichen 35a eine Fangkurve, welche dazu geeignet und bestimmt ist, die Kurvenrolle 34 einzufangen bzw. in jeder beliebigen Position zu erfassen. In dieser Fangkurve erfolgt eine Vorausrichtung der Kurvenrolle 34. An diese Fangkurve 35a schließt sich eine Prozesskurve 35b an, innerhalb derer bevorzugt eine Erwärmung der Kunststoffvorformlinge in der gegebenen Position stattfindet.

An die Prozesskurve 35b schließt sich eine Übergabekurve 35c an, welche die Drehstellung der Kunststoffvorformlinge in einer gewünschten Form ausrichtet, um so die Kunststoffvorformlinge an einer weitere Transporteinrichtung 14 zu übergeben. Bei einer bevorzugten Ausführungsform sind die Positionen der Prozesskurve und/oder der Übergabekurve veränderbar um so eine Anpassung der Drehstellung an unterschiedliche Prozessbedingungen zu erreichen.

Bei einer weiteren bevorzugten Ausführungsform weist die die Vorrichtung eine Antriebseinrichtung auf um die Prozesskurve und/oder die Übergabekurve zu verstellen. So kann beispielsweise eine elektromotorische Antriebseinrichtung vorgesehen seine, welche eine Verstellung der Prozesskurve und/oder der Übergabekurve bewirkt.

Figur 6 veranschaulicht die Übergabekurve, mittels derer eine Spindelrotation in einem Uhrzeigersinn (Draufsicht) eingeleitet wird. Dies hat zur Folge, dass die Ofen-äußere Seite des Kunststoffvorformlings in der Blasform entgegen der Rotationsrichtung des Blasrades ausgerichtet sein wird.

Figur 7 zeigt eine weitere Darstellung der Halteeinrichtung. Dabei ist auch hier wieder die Führungsrolle 34 auf der drehbaren Platte 32 dargestellt. Das Bezugszeichen 26A kennzeichnet einen Dorn, der in die Mündungen der Kunststoffvorformlinge eingreift, um diese so zu halten. Dabei kann dieser Dorn 26a auch Klemmmechanismen aufweisen, welche zum Einspannen des Kunststoffvorformlings dienen.

Figur 8 zeigt eine Draufsicht auf die in Figur 7 gezeigte Halteeinrichtung. Dabei ist auch hier wieder die Führungsrolle 34 auf einem Arm 35 angeordnet, der wiederum an der Platte 32 befestigt ist. Durch die Führungskurven ist eine 90° Korrektur der Drehstellung des Spindelantriebs bzw. der Führungsrolle möglich.

Aufgrund der bevorzugt einstellbaren bzw. verschiebbaren Prozesskurve 35b (vgl. Figur 5) können alle im Nachgang beschriebenen Konzepte auch zur Regelung bzw. Einstellung des mittleren Übergabewinkels genutzt werden. Hierzu wird bevorzugt der Antrieb der Prozesskurve in Abhängigkeit von einem gemessenen Übergabewinkel nachjustiert.

Auf diese Weise kann beispielsweise eine Prozesskontrolle von Preferential Heating Maschinen erfolgen (zum Beispiel um einem Drift des Übergabewinkels während des Warmfahrens des Ofens entgegenzuwirken).

Daneben können jedoch auch Neukundenobjekte an entsprechenden Maschinen, welche ein bevorzugtes Erwärmen erlauben genutzt werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Herstellen von Kunststoffbehältnissen (10) mit einer Erwärmungseinrichtung (2) zum Erwärmen von Kunststoffvorformlingen (10), wobei die Erwärmungseinrichtung (2) eine Transporteinrichtung (22) aufweist, welche die Kunststoffvorformlinge (10) entlang eines vorgegebenen Transportpfads (T) vereinzelt transportiert und diese Transporteinrichtung (22) eine Vielzahl von Halteeinrichtungen (26) zum Halten der Kunststoffvorformlinge (10) aufweist und wenigstens eine Erwärmungseinheit (24) vorgesehen ist, welche die Kunststoffvorformlinge (10) erwärmt, wobei weiterhin eine Dreheinrichtung (28) vorgesehen ist, welche die von den Halteeinrichtungen (26) gehaltenen Kunststoffvorformlinge (10) während ihres Transports durch die Erwärmungseinrichtung (2) bezüglich deren Längsrichtung dreht und mit einer Umformungseinrichtung (4), welche die von der Erwärmungseinrichtung (2) transportierten Kunststoffvorformlinge (10) zu Kunststoffbehältnissen umformt, wobei diese Umformungseinrichtung (4) wenigstens eine Umformungsstation (45) aufweist, welche die Kunststoffvorformlinge (10) durch Beaufschlagung mit einem fließfähigen Medium zu den Kunststoffbehältnissen umformt,
**dadurch gekennzeichnet, dass**
die Vorrichtung (1) eine Ausrichteinrichtung (40) aufweist, welche eine Ausrichtung der Drehstellung der Kunststoffvorformlinge (10) bezüglich deren Längsrichtung gegenüber den diese Kunststoffvorformlinge (10) haltenden Halteeinrichtungen (26) ermöglicht und/oder die Vorrichtung (1) eine entlang des Transportpfads angeordnete Drehstellungsausrichteinrichtung (50) aufweist, welche eine Ausrichtung einer Drehstellung der Halteeinrichtungen mit den daran angeordneten Kunststoffvorformlingen ermöglicht.

2. Vorrichtung (1) nach Anspruch 1,
**dadurch gekennzeichnet, dass**
die Erwärmungseinrichtung (2) eine Stelleinrichtung (30) aufweist, welche eine Einstellung einer Drehstellung der Kunststoffvorformlinge (10) ermöglicht und bevorzugt diese Stelleinrichtung in der Transportrichtung der Kunststoffvorformlinge nach der Ausrichteinrichtung (40) und/oder nach der Drehstellungsausrichtungseinrichtung (50) angeordnet ist.

3. Vorrichtung nach wenigstens einem der vorangegangenen Ansprüche,
**dadurch gekennzeichnet, dass**
die Umformungseinrichtung (4) dazu geeignet und bestimmt ist, Kunststoffbehältnisse mit einem von einem kreisförmigen Querschnitt abweichenden Querschnitt herzustellen.

4. Vorrichtung (1) nach wenigstens einem der vorangegangenen Ansprüche,
**dadurch gekennzeichnet, dass**
die Stelleinrichtung (30) eine mechanisch wirkende Stelleinrichtung ist und bevorzugt die Stelleinrichtung eine Führungskurve aufweist, die mit wenigstens einer an der Halteeinrichtung angeordneten ersten Führungsrolle zusammenwirkt, um eine Drehstellung der Kunststoffvorformlinge einzustellen.

5. Vorrichtung (1) nach wenigstens einem der vorangegangenen Ansprüche,
**dadurch gekennzeichnet, dass**
die Ausrichteinrichtung (40) im Bereich einer Zuführeinrichtung angeordnet ist, welche der Erwärmungseinrichtung (2) die Kunststoffvorformlinge (10) zuführt.

6. Vorrichtung (1) nach wenigstens einem der vorangegangenen Ansprüche,
**dadurch gekennzeichnet, dass**
die Ausrichteinrichtung (40) eine Inspektionseinrichtung (42) aufweist, welche die Kunststoffvorformlinge (10) inspiziert und welche insbesondere eine Drehstellung der Kunststoffvorformlinge (10) bezüglich deren Längsrichtungen ermittelt.

7. Vorrichtung (1) nach wenigstens einem der vorangegangenen Ansprüche,
**dadurch gekennzeichnet, dass**
die Ausrichteinrichtung (40) eine Lagesicherungseinrichtung aufweist, welche eine Drehposition der Kunststoffvorformlinge arretiert.

8. Vorrichtung (1) nach wenigstens einem der vorangegangenen Ansprüche,
**dadurch gekennzeichnet, dass**
die Ausrichteinrichtung (40) erste Halteeinrichtungen zum Halten der Kunststoffvorformlinge aufweist, wobei diese ersten Halteeinrichtungen bevorzugt als Haltedorne ausgeführt sind, welche in die Mündungen der Kunststoffvorformlinge (10) einführbar sind.

9. Vorrichtung (1) nach wenigstens einem der vorangegangenen Ansprüche,
**dadurch gekennzeichnet, dass**
die Ausrichteinrichtung (40) eine Spüleinrichtung zum Spülen der Kunststoffvorformlinge aufweist.

10. Vorrichtung (1) nach wenigstens einem der vorangegangenen Ansprüche,
**dadurch gekennzeichnet, dass**
die Ausrichteinrichtung (40) eine Dreheinrichtung aufweist, welche die Kunststoffvorformlinge und/oder die Halteeinrichtungen bezüglich der Längsachse der Kunststoffvorformlinge (10) dreht, um eine relative Drehstellung der Kunststoffvorformlinge gegenüber den Halteeinrichtungen zu ändern.

11. Vorrichtung (1) nach wenigstens einem der vorangegangenen Ansprüche,
**dadurch gekennzeichnet, dass**
die Erwärmungseinrichtung (2) wenigstens eine Antriebseinrichtung zum Drehen der Halteeinrichtungen aufweist und bevorzugt diese Antriebseinrichtung wenigstens abschnittsweise von der Halteeinrichtung hinsichtlich dieser Drehbewegung entkoppelbar ist.

12. Verfahren zum Herstellen von Kunststoffbehältnissen (10) wobei Kunststoffvorformlinge (10) mit einer Erwärmungseinrichtung (2) erwärmt werden wobei die Erwärmungseinrichtung (2) eine Transporteinrichtung (22) aufweist, welche die Kunststoffvorformlinge (10) entlang eines vorgegebenen Transportpfads (T) vereinzelt transportiert und diese Transporteinrichtung (22) eine Vielzahl von Halteeinrichtungen (26) aufweist, welche die Kunststoffvorformlinge halten und wenigstens eine Erwärmungseinheit (24) vorgesehen ist, welche die Kunststoffvorformlinge (10) erwärmt und wobei weiterhin eine Dreheinrichtung (28) die von den Halteeinrichtungen (26) gehaltenen Kunststoffvorformlinge (10) während ihres Transports durch die Erwärmungseinrichtung (2) bezüglich deren Längsrichtung dreht und wobei eine Umformungseinrichtung (4) die von der Erwärmungseinrichtung (2) transportierten Kunststoffvorformlinge (10) zu Kunststoffbehältnissen umformt, wobei diese Umformungseinrichtung (4) wenigstens eine Umformungsstation (45) aufweist, welche die Kunststoffvorformlinge (10) durch Beaufschlagung mit einem fließfähigen Medium zu den Kunststoffbehältnissen umformt,
**dadurch gekennzeichnet, dass**
eine Ausrichteinrichtung (40) eine Ausrichtung der Drehstellung der Kunststoffvorformlinge bezüglich deren Längsrichtung gegenüber den diese Kunststoffvorformlinge haltenden Halteeinrichtungen (26) ermöglicht und/oder eine Drehstellungsausrichteinrichtung eine Ausrichtung der Drehstellung der Halteeinrichtungen mit den daran angeordneten Kunststoffvorformlingen ermöglicht.

13. Verfahren nach Anspruch 12,
**dadurch gekennzeichnet, dass**
die Drehstellung der Kunststoffvorformlinge (10) mittels einer mechanischen Stelleinrichtung (30), welche in der Transportrichtung der Kunststoffvorformlinge (10) nach der Ausrichteinrichtung (40) angeordnet ist und insbesondere mittels wenigstens einer Führungskurve verstellt wird wobei bevorzugt eine Verstellung dieser Führungskurve in Abhängigkeit von einer Drehstellung der Kunststoffvorformlinge (10) erfolgt.

14. Verfahren nach wenigstens einem der vorangegangenen Ansprüche,
**dadurch gekennzeichnet, dass**
die Ausrichtung der Drehstellung der Kunststoffvorformlinge (10) bezüglich deren Längsrichtung gegenüber den diese Kunststoffvorformlinge (10) haltenden Halteeinrichtungen vor der Erwärmung der Kunststoffvorformlinge (10) erfolgt oder die Drehstellungsausrichtung der Halteeinrichtungen mit den daran angeordneten Kunststoffvorformlingen während des Transports der Kunststoffvorformlinge (10) durch die Erwärmungseinrichtung (2) und insbesondere an einer Umlenkung der Erwärmungseinrichtung erfolgt.
